# EUROPEAN PATENT APPLICATION

(11) **EP 4 407 369 A1**
(43) Date of publication of application: **31.07.2024**
(21) Application number: 23207159.7
(22) Date of filing: 31.10.2023
(51) Int. Cl.: G02F 1/1339

(54) **LIQUID CRYSTAL DISPLAY DEVICE**

(30) Priority: 27.01.2023 KR 20230010982
(71) Applicant: LG Display Co., Ltd., Seoul 07336 (KR)
(72) Inventor: KANG, Sang-Ho, Paju-si, Gyeonggi-do 10845 (KR); CHOI, Seo-Won, Paju-si, Gyeonggi-do 10845 (KR)
(74) Representative: Bryn-Jacobsen, Caelia

(57) **Abstract**

Provided is a liquid crystal display device. The liquid crystal display device includes: an array substrate in which a pixel region is disposed, the pixel region including a thin film transistor and a pixel electrode connected to the thin film transistor; a counter substrate facing the array substrate; a liquid crystal layer interposed between the array substrate and the counter substrate; and a gap column spacer which maintains a cell gap between the array substrate and the counter substrate, and includes a bottom end portion having a first width, and a top end portion having a second width smaller than the first width.

## Description

### CROSS REFERENCE TO RELATED APPLICATIONS

The present application claims the priority benefit of Korean Patent Application No. 10-2023-0010982 filed in Republic of Korea on January 27, 2023.

### BACKGROUND

### Technical Field

The present disclosure relates to a liquid crystal display device, and more particularly, for example, without limitation, to a liquid crystal display device which can improve image quality defects by improving a support force of a gap column spacer.

### Discussion of the Related Art

A liquid crystal display device has been widely used because it has advantages of miniaturization, light weight, thinness, and low power operation.

In the liquid crystal display device, gap column spacers are used to maintain a cell gap of a liquid crystal layer.

However, since the gap column spacer currently applied to the liquid crystal display device has poor support, the gap column spacer collapses, image quality defects such as a frame mura defect, a RGB eye defect, and a milky way defect may occur.

The description provided in the description of the related art section should not be assumed to be prior art merely because it is mentioned in or associated with the description of the related art section. The description of the related art section may include information that describes one or more aspects of the subject technology.

### SUMMARY

The inventors have recognized requirements on the gap column spacer described above and limitations on improving image quality. Accordingly, the present disclosure is directed to a liquid crystal display device that substantially obviates one or more of the problems due to limitations and disadvantages of the related art.

An advantage of the present disclosure is to provide a liquid crystal display device which can improve image quality defects by improving the support force of a gap column spacer.

Additional features and advantages of the disclosure will be set forth in the description which follows, and in part will be apparent from the description, or may be learned by practice of the disclosure. These and other advantages of the disclosure will be realized and attained by the structure particularly pointed out in the written description and claims hereof as well as the appended drawings.

To achieve these and other advantages and in accordance with the purpose of the present disclosure, as embodied and broadly described herein, a liquid crystal display device includes: an array substrate in which a pixel region is disposed, the pixel region including a thin film transistor and a pixel electrode connected to the thin film transistor; a counter substrate facing the array substrate; a liquid crystal layer interposed between the array substrate and the counter substrate; and a gap column spacer which maintains a cell gap between the array substrate and the counter substrate, and includes a bottom end portion having a first width, and a top end portion having a second width smaller than the first width.

In another aspect, a method of manufacturing a liquid crystal display device includes: placing a photomask on a first substrate on which a photosensitive material is formed and conducting a light exposure, the photomask including a mask pattern which includes a full-tone pattern portion, a first half-tone pattern portion surrounding the full-tone pattern portion, and a light blocking pattern portion between the full-tone pattern portion and the first half-tone pattern portion; developing the photosensitive material to form a gap column spacer corresponding to the mask pattern; and combining a first substrate on which the gap column spacer is formed and a second substrate which faces the first substrate with a liquid crystal layer between the first substrate and the second substrate.

In yet another aspect, a liquid crystal display device includes: a gap column spacer and a press column spacer on the first substrate, the press column spacer having a thickness smaller than the gap column spacer; and a second substrate facing the first substrate with a liquid crystal layer therebetween, wherein each of the gap column spacer and the press column spacer has a tapered shape with a bottom end portion having a width greater than a top end portion, and wherein a ratio of a second width of the top end portion of the gap column spacer to a first width of the bottom end portion of the gap column spacer is smaller than a ratio of a fourth width of the top end portion of the press column spacer to a third width of the bottom end portion of the press column spacer.

It is to be understood that both the foregoing general description and the following detailed description are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this specification, illustrate exemplary examples of the disclosure and together with the description serve to explain the principles of the disclosure. In the drawings:
FIG. 1 is a plan view illustrating a portion of a liquid crystal display device according to an exemplary example of the present disclosure;
FIG. 2 is a cross-sectional view taken along a line II-II' of FIG. 1 according to an exemplary example of the present disclosure;
FIG. 3 is a view schematically illustrating a gap column spacer according to an exemplary example of the present disclosure;
FIG. 4 is a view illustrating a result of an experiment on a level of image quality defect for a first width of a bottom end portion and a second width of a top end portion of a gap column spacer according to an exemplary example of the present disclosure;
FIG. 5 is a plan view schematically illustrating a mask pattern forming a gap column spacer according to an exemplary example of the present disclosure;
FIG. 6 is a cross-sectional view schematically illustrating a gap column spacer and a corresponding mask pattern according to an exemplary example of the present disclosure;
FIG. 7 is a cross-sectional view schematically illustrating a gap column spacer and a corresponding mask pattern of a comparative example; and
FIG. 8 is a cross-sectional view schematically illustrating a press column spacer and a corresponding mask pattern according to an exemplary example of the present disclosure.

Throughout the drawings and the detailed description, unless otherwise described, the same drawing reference numerals should be understood to refer to the same elements, features, and structures. The relative size and depiction of these elements may be exaggerated for clarity, illustration, and convenience.

### DETAILED DESCRIPTION OF THE ILLUSTRATED EXAMPLES

Advantages and features of the present disclosure and methods of achieving them will be apparent with reference to the exemplary examples described below in detail with the accompanying drawings. However, the present disclosure is not limited to the exemplary examples disclosed below, but can be realized in a variety of different forms, and only these exemplary examples allow the present disclosure to be complete. The present disclosure is provided to fully inform the scope of the disclosure to the skilled in the art of the present disclosure, and the present disclosure can be defined by the scope of the claims.

The shapes, sizes, areas, ratios, angles, numbers, and the like disclosed in the drawings for explaining the exemplary examples of the present disclosure are illustrative, and the present disclosure is not limited to the illustrated matters. The same reference numerals refer to the same components throughout the description.

Furthermore, in describing the present disclosure, if it is determined that a detailed description of the related known technology unnecessarily obscure the subject matter of the present disclosure, the detailed description thereof can be omitted. When "include," "have," "comprise," "contain," "constitute," "make up of," "formed of," and "consist of", and the like are used in this disclosure, other parts can be added unless the term such as "only" is used. When a component is expressed in the singular, cases including the plural are included unless specific statement is described.

In interpreting the components, even if there is no separate explicit description, it is interpreted as including a margin range.

In the case of a description of a positional relationship, for example, when the positional relationship of two parts is described as "on", "above", "over", "below", "under", "beside", "beneath", "near", "close to," "adjacent to", "on a side of", "next" or the like, one or more other parts can be positioned between such two parts unless the term such as "immediately" or "directly" is used.

Spatially relative terms, such as "under," "below," "beneath", "lower," "over," "upper" and the like, may be used herein for ease of description to describe one element or feature's relationship to another element(s) or feature(s) as illustrated in the figures. It will be understood that the spatially relative terms can encompass different orientations of an element in use or operation in addition to the orientation depicted in the figures. For example, if an element in the figures is inverted, elements described as "below" or "beneath" other elements or features would then be oriented "over" the other elements or features. Thus, the exemplary term "below" can encompass both an orientation of below and above. Similarly, the exemplary term "above" or "over" can encompass both an orientation of "above" and "below".

In the case of a description of a temporal relationship, for example, when a temporal precedence is described as terms such as "after," "subsequent to," "following," "next," "before," and the like, cases that are not continuous can be included unless the term such as "immediately" "just" or "directly" is used.

Although the terms "first", "second", "A", "B", "(a)", "(b)" and the like are used for describing various components, these components are not confined by these terms. These terms are merely used for distinguishing one component from the other components. Therefore, a first component to be mentioned below may be a second component in a technical concept of the present disclosure.

In describing components of the present disclosure, terms such as first, second, A, B, (a), (b), or the like can be used. These terms are only for distinguishing the components from other components, and an essence, order, order, or number of the components is not limited by the terms. Further, when it is described that a component is "connected", "coupled" or "contact" to another component, the component can be directly connected or contact the another component, but it should be understood that other component can be "interposed" between the components.

The term "at least one" should be understood as including any and all combinations of one or more of the associated listed items. For example, the meaning of "at least one of a first item, a second item, and a third item" denotes the combination of all items proposed from two or more of the first item, the second item, and the third item as well as the first item, the second item, or the third item.

A term "device" used herein may refer to a display device including a display panel and a driver for driving the display panel. Examples of the display device may include liquid crystal display, and the like. In addition, examples of the device may include a notebook computer, a television, a computer monitor, an automotive device, a wearable device, and an automotive equipment device, and a set electronic device (or apparatus) or a set device (or apparatus), for example, a mobile electronic device such as a smartphone or an electronic pad, which are complete products or final products respectively including a liquid crystal display and the like, but examples of the present disclosure are not limited thereto.

A size and a thickness of each component illustrated in the drawing are illustrated for convenience of description, and the present disclosure is not limited to the size and the thickness of the component illustrated.

Respective features of various exemplary examples of the present disclosure can be partially or wholly connected to or combined with each other and can be technically interlocked and driven variously, and respective exemplary examples can be independently implemented from each other or can be implemented together with a related relationship.

Unless otherwise defined, all terms (including technical and scientific terms) used herein have the same meaning as commonly understood by one of ordinary skill in the art to which examples belong. It will be further understood that terms, such as those defined in commonly used dictionaries, should be interpreted as having a meaning for example consistent with their meaning in the context of the relevant art and should not be interpreted in an idealized or overly formal sense unless expressly so defined herein.

In the aspects of the present disclosure, a source electrode and a drain electrode are distinguished from each other, for convenience of description. However, the source electrode and the drain electrode are used interchangeably. The source electrode may be the drain electrode, and the drain electrode may be the source electrode. Also, the source electrode in any one aspect of the present disclosure may be the drain electrode in another aspect of the present disclosure, and the drain electrode in any one aspect of the present disclosure may be the source electrode in another aspect of the present disclosure.

Hereinafter, exemplary examples of the present disclosure are described in detail with reference to the drawings. Meanwhile, in the following exemplary examples, the same and like reference numerals are assigned to the same and like components, and detailed descriptions thereof may be omitted.

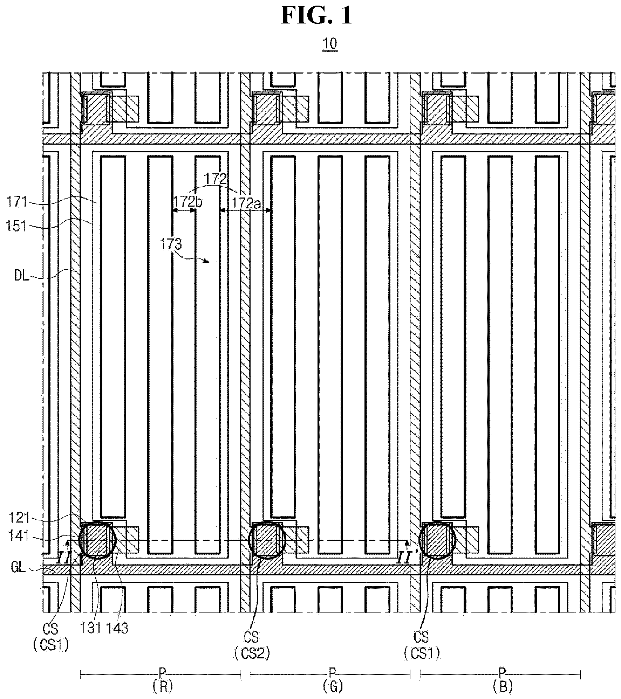

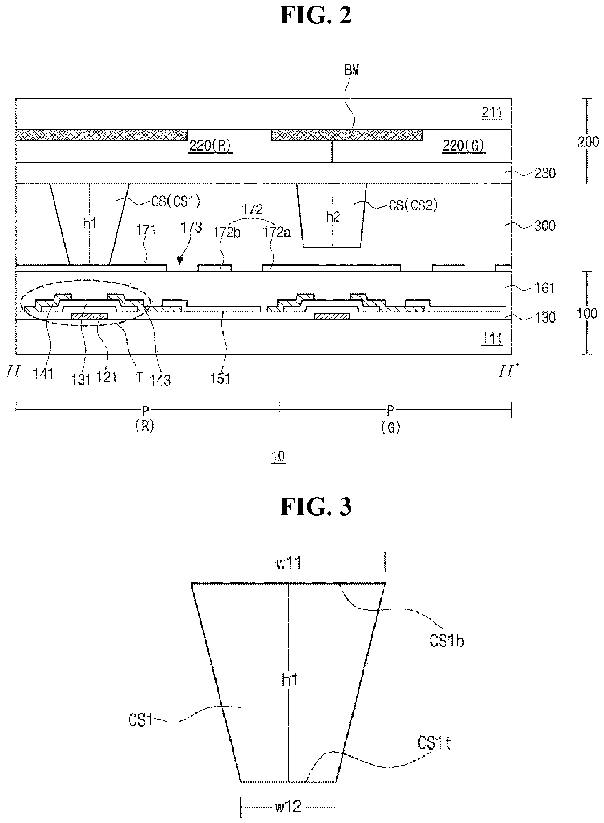

FIG. 1 is a plan view illustrating a portion of a liquid crystal display device according to an exemplary example of the present disclosure, and FIG. 2 is a cross-sectional view taken along a line II-II' of FIG. 1. All the components of each liquid crystal display device according to all examples of the present disclosure are operatively coupled and configured.

As the liquid crystal display device 10 according to an exemplary example of the present disclosure, all types of liquid crystal display devices, such as an IPS (in-plane switching) type, a VA (vertical alignment) type, and a TN (twisted nematic) type, can be used. For convenience of explanation, an IPS type liquid crystal display device is taken as an example.

Referring to FIGs. 1 and 2, the liquid crystal display device 10 according to an exemplary example of the present disclosure may include an array substrate 100 (or lower substrate) and a counter substrate 200 (or upper substrate) facing each other, and a liquid crystal layer 300 interposed between the array substrate 100 and the counter substrate 200.

Meanwhile, although not specifically shown, a backlight unit that provides light may be disposed below the array substrate 100.

The liquid crystal display device 10 may include a display region that displays an image and a non-display region disposed in the vicinity of the display region, surrounding the display region, or around the display region. In the display region, a plurality of pixel regions P may be arranged in a matrix form along a plurality of row and column lines.

The plurality of pixel regions P may include pixel regions P displaying different colors, for example, red (R), green (G), and blue (B), or red (R), green (G), blue (B), and white (W). At this time, the red (R), green (G), and blue (B) pixel regions P that are adjacent to each other or the red (R), green (G), blue (B), and white (W) pixel regions P that are adjacent to each other may function as a unit pixel for displaying a color image.

Each of the pixel regions P may include a sub pixel SP. The sub pixel SP is a minimum unit which configures a screen and each of the plurality of sub pixels SP may emit light having different wavelengths from each other. The plurality of sub pixels may include first to third sub pixels which emit different color light from each other. For example, the plurality of sub pixels SP may include a red sub pixel SPR which is a first sub pixel, a green sub pixel SPG which is a second sub pixel, and a blue sub pixel SPB which is a third sub pixel. Further, the plurality of sub pixels SP may also further include a white sub pixel.

For example, the plurality of sub pixels SP may include red, green, and blue sub-pixels, in which the red, green, and blue sub-pixels may be disposed in a repeated manner. Alternatively, the plurality of sub pixels SP may include red, green, blue, and white sub-pixels, in which the red, green, blue, and white sub-pixels may be disposed in a repeated manner, or the red, green, blue, and white sub-pixels may be disposed in a quad type. For example, the red sub pixel, the blue sub pixel, and the green sub pixel may be sequentially disposed along a row direction, or the red sub pixel, the blue sub pixel, the green sub pixel and the white sub pixel may be sequentially disposed along the row direction. However, in the exemplary example of the present disclosure, the color type, disposition type, and disposition order of the sub-pixels are not limiting, and may be configured in various forms according to light-emitting characteristics, device lifespans, and device specifications.

Meanwhile, the sub-pixels may have different light-emitting areas according to light-emitting characteristics. For example, a sub-pixel that emits light of a color different from that of a blue sub-pixel may have a different light-emitting area from that of the blue sub-pixel. For example, the red sub-pixel, the blue sub-pixel, and the green sub-pixel, or the red sub-pixel, the blue sub-pixel, the white sub-pixel, and the green sub-pixel may each has a different light-emitting area.

In the array substrate 100 of the liquid crystal display device 10, a plurality of gate lines GL extending in a first direction, for example, along a row direction may be formed on a first substrate 111.

A gate insulating layer 130, which is an insulating layer made of an insulating material, may be formed on the gate line GL. On the gate insulating layer 130, a plurality of data lines DL extending along a column direction as a second direction may be formed.

The plurality of pixel regions P may be defined by the gate lines GL and data lines DL that cross each other.

In each pixel region P, a thin film transistor T connected to the gate line GL and data line DL may be formed.

The thin film transistor T may include a gate electrode 121 connected to the gate line GL, a semiconductor layer 131 located on the gate insulating layer 130 over the gate electrode 121, and a source electrode 141 and a drain electrode 143 spaced apart from each other on the semiconductor layer 131. Here, the source electrode 141 may be connected to the data line DL.

The semiconductor layer 131 may be formed of an oxide semiconductor material, an amorphous semiconductor material, a polycrystalline semiconductor material, or an organic semiconductor material, but the present disclosure is not limited thereto.

The oxide semiconductor material may have an excellent effect of preventing a leakage current and relatively inexpensive manufacturing cost. The oxide semiconductor may be made of a metal oxide such as zinc (Zn), indium (In), gallium (Ga), tin (Sn), and titanium (Ti) or a combination of a metal such as zinc (Zn), indium (In), gallium (Ga), tin (Sn), or titanium (Ti) and its oxide. Specifically, the oxide semiconductor may include zinc oxide (ZnO), zinc-tin oxide (ZTO), zinc-indium oxide (ZIO), indium oxide (InO), titanium oxide (TiO), indium-gallium-zinc oxide (IGZO), indium-zinc-tin oxide (IZTO) , indium zinc oxide (IZO), indium gallium tin oxide (IGTO), and indium gallium oxide (IGO), but is not limited thereto.

The polycrystalline semiconductor material has a fast movement speed of carriers such as electrons and holes and thus has high mobility, and has low energy power consumption and superior reliability. The polycrystalline semiconductor may be made of polycrystalline silicon (poly-Si), but is not limited thereto.

The amorphous semiconductor material may be made of amorphous silicon (a-Si), but is not limited thereto. The organic semiconductor material may include metal-organic compounds, but is not limited thereto.

A pixel electrode 151 connected to the drain electrode 143 of the thin film transistor T may be formed in each pixel region P. The pixel electrode 151 may be formed of a transparent conductive material such as ITO, IZO, or ITZO, but not limited thereto.

Meanwhile, the pixel electrode 151 may be disposed on the drain electrode 143 with at least one insulating layer interposed therebetween. In this case, a contact hole may be formed in the insulating layer formed between the pixel electrode 151 and the drain electrode 143, and the pixel electrode 151 may contact the drain electrode 143 through the contact hole.

A passivation layer 161, which is an insulating layer made of an insulating material, may be formed on the pixel electrode 151 and the thin film transistor T.

A common electrode 171 facing the pixel electrode 151 may be formed on the passivation layer 161. The common electrode 171 may be formed of a transparent conductive material such as ITO, IZO, or ITZO, but not limited thereto.

This common electrode 171, together with the pixel electrode 151, can drive the liquid crystal layer 300 by forming a fringe field which is an in-plane electric field (or horizontal electric field).

The common electrode 171 may include a plurality of bar-shaped electrode patterns 172 which correspond to each pixel region P and face the pixel electrode 151, and an opening 173 may be formed between the electrode patterns 172.

The plurality of electrode patterns 172 may be formed to extend along an extension direction of the data line DL. In addition, the plurality of electrode patterns 172 may include a first electrode pattern 172a which is close to the data line DL and is located on an outermost side of the pixel region P, and a second electrode pattern 172b located inside the first electrode pattern 172a.

Here, the first electrode pattern 172a may have a greater width than the data line DL and may substantially cover the data line DL therebelow, but not limited thereto.

When the first electrode pattern 172a is formed in the above manner, electrical interference between the data line DL and the pixel electrode 151 can be prevented.

The second electrode pattern 172b may have a smaller width than the first electrode pattern 172a, but it is not limited thereto.

Meanwhile, as another example of an arrangement structure of the common electrode 171 and the pixel electrode 151, the common electrode 171 may be formed so that a portion of the common electrode 171 corresponding to the pixel electrode 151 has a plate shape, and the pixel electrode 151 including a plurality of electrode patterns may be formed on the common electrode 171 with an insulating layer therebetween.

As yet another example, each of the common electrode 171 and the pixel electrode 151 may have electrode patterns, the electrode pattern of the common electrode 171 and the electrode pattern of the pixel electrode 151 may be arranged alternately, and the common electrode 171 and the pixel electrode 151 may be placed at the same layer or may be placed with an insulating layer therebetween.

Meanwhile, although not specifically shown, the common electrode 171 may be configured to be used as a touch electrode. In this case, for example, the common electrode 171 may function as an electric field generating electrode driving the liquid crystal by receiving a common voltage during a display period, and function as a touch electrode by receiving a touch driving signal during a touch detection period between the display periods. In this way, the common electrode 171 may serve as an in-cell touch type touch electrode.

Meanwhile, although not specifically shown, in the array substrate 100, an alignment layer (or first alignment layer) for aligning the liquid crystal molecules of the liquid crystal layer 300 may be formed on the common electrode 171.

In the counter substrate 200 located on the array substrate 100, color filter patterns 220 may be formed on an inner surface of a second substrate 211. In this regard, for example, red (R), green (G), and blue (B) color filter patterns 220 may be formed corresponding to the red (R), green (G), and blue (B) pixel regions P.

Meanwhile, in the counter substrate 200, a black matrix BM may be formed along a boundary between neighboring pixel regions P. The black matrix BM may be arranged to cover non-display array elements formed in the array substrate 100, for example, elements such as the data line DL, the gate line GL, the thin film transistor T and the like.

An opening may be formed in the black matrix BM corresponding to the pixel region P, and the color filter pattern 220 corresponding to each pixel region P may fill the opening of the black matrix BM and cover an edge of the black matrix BM.

An overcoat layer 230, which is an insulating layer made of an insulating material, may be formed on the color filter pattern 220. The overcoat layer 230 may flatten a surface of the second substrate 211 having the color filter pattern 220.

In this exemplary example, as described above, the case where the color filter pattern 220 is formed in the counter substrate 200 is taken as an example. As another example, the color filter pattern 220 may be configured to be formed in the array substrate 100, and in this case, the color filter pattern 200 may be disposed over the thin film transistor T.

Meanwhile, a plurality of column spacers CS may be disposed on the overcoat layer 230.

The plurality of column spacers CS may be formed in a tapered shape or a frustum of a cone shape whose width narrows along a direction perpendicular to the substrate. For example, the column spacer CS may have a tapered shape or a frustum of a cone shape in which a width thereof becomes narrower along a direction toward the array substrate 100 which is the downward direction in the drawing. But the examples of the present disclosure are not limited thereto, for example, the column spacer CS may have a frustum of a pyramid shape in which a width thereof becomes narrower along a direction toward the array substrate 100.

The plurality of column spacers CS may include a plurality of gap column spacers (or first column spacers) CS1 distributed in a plane on the counter substrate 200. The gap column spacer CS1 may function to maintain a cell gap between the array substrate 100 and the counter substrate 200.

The gap column spacer CS1, which has the cell gap maintenance function, may be configured in a state of substantially pressing both the counter substrate 200 and the array substrate 100 (or being pressed from both the counter substrate 200 and the array substrate 100).

Meanwhile, the plurality of column spacers CS may include press column spacers (or second column spacers) CS2 that prevent deformation when an external force is applied to the liquid crystal display device 10. The press column spacers CS2 may be distributed in a plane on the counter substrate 200.

The press column spacer CS2, which prevents deformation when an external force is applied, may be substantially spaced apart from the array substrate 100 facing the counter substrate 200 in which the press column spacer CS2 is formed when no external force is applied.

The gap column spacer CS1 may have a greater thickness (or greater height) than the press column spacer CS2. For example, the gap column spacer CS 1 may have a first thickness h1 substantially corresponding to the cell gap, and the press column spacer CS2 may have a second thickness h2 that is smaller than the first thickness.

The column spacers CS configured as above may be placed, for example, at positions corresponding to the non-display array elements of the array substrate 100. For example, as shown in FIGs. 1 and 2, the column spacers CS may be positioned to correspond to the thin film transistors T. In a different way, the column spacers CS may be arranged to correspond to the gate lines GL and/or the data lines DL, and in some cases, may be arranged to correspond to the pixel electrodes 151.

As above, in this exemplary example, the case where the column spacer CS is formed in the counter substrate 200 is taken as an example. As another example, the column spacer CS may be formed in the array substrate 100.

Meanwhile, although not specifically shown, an alignment layer (or a second alignment layer) for aligning the liquid crystal molecules of the liquid crystal layer 300 may be formed on the column spacer CS and the overcoat layer 230.

Hereinafter, a structure of the gap column spacer CS1 of this exemplary example is described in more detail with further reference to FIG. 3. FIG. 3 is a view schematically illustrating a gap column spacer according to an exemplary example of the present disclosure.

The tapered gap column spacer CS1 or the frustum of a cone shaped gap column spacer CS1 may be formed such that a bottom end portion (or first bottom end portion) CS1b on a side of the counter substrate 200, which is a substrate having the gap column spacer CS1 formed therein, has a wide width w11, and a top end portion (or first top end portion) CS1t located opposite to the bottom end portion CS1b (i.e., the top end portion located on a side of the array substrate 100) has a narrow width w12.

In other words, the gap column spacer CS1 may be formed in a tapered shape or a frustum of a cone shape such that the bottom end portion CS1b has the first width w11 and the top end portion CS1t has the second width w12, and a width becomes narrower along a direction from the bottom end portion CS1b to the top end portion CS1t.

Here, the first width w11 of the bottom end portion CS1b and the second width w12 of the top end portion CS1t may be formed at a specific ratio. For example, w12/w11 may be set to 0.55 or less, for example, w12/w11 may be set to 0.5 or w12/w11 may be set to 0.45.

In this case, the width w11 of the bottom end portion CS1b which serves as a support portion of the gap column spacer CS1 is relatively large, so that a support surface of the gap column spacer CS1 increases, and due to the tapered structure with an overall gentle slope (or overall gentle inclination angle), it is possible to have advantageous characteristics for impact and dispersion of an external force.

As such, the gap column spacer CS1 has a shape with improved support force, so collapse of the gap column spacer CS1 due to an external force acting on the liquid crystal display device 10 can be relieved.

In addition, the top end portion CS1t of the gap column spacer CS1 may have a smaller width than the bottom end portion CS1b. Accordingly, a black touch mura defect that occur when the top end portion CS1t has a wide width can be relieved, and a liquid crystal margin can be secured.

In this regard, when the top end portion CS1t of the gap column spacer CS1 increases in width, a friction of the gap column spacer CS1 increases, so that a black touch mura defect occurs and a liquid crystal margin is reduced.

In contrast, in this exemplary example, the top end portion CS1t of the gap column spacer CS1 can have the small width w12. Thus, a friction of the gap column spacer CS1 is not increased, so that a black touch mura defect can be prevented, and a sufficient liquid crystal margin can be secured.

As a result, in this exemplary example, the gap column spacer CS1 can be formed so that the bottom end portion CS1b has the wide width w11 and the top end portion CS1t has the narrow width.

Accordingly, the support force of the gap column spacer CS1 is improved, thereby preventing collapse due to an external force. Accordingly, it is possible to improve image quality defects such as a frame mura defect, a RGB eye defect, and a milky way defect that occur when the gap column spacer CS1 collapses.

Moreover, there is no need to increase the width w12 of the top end portion CS1t of the gap column spacer CS1 in order to improve a support force, so that a black touch mura defect can be prevented and a sufficient liquid crystal margin can be secured.

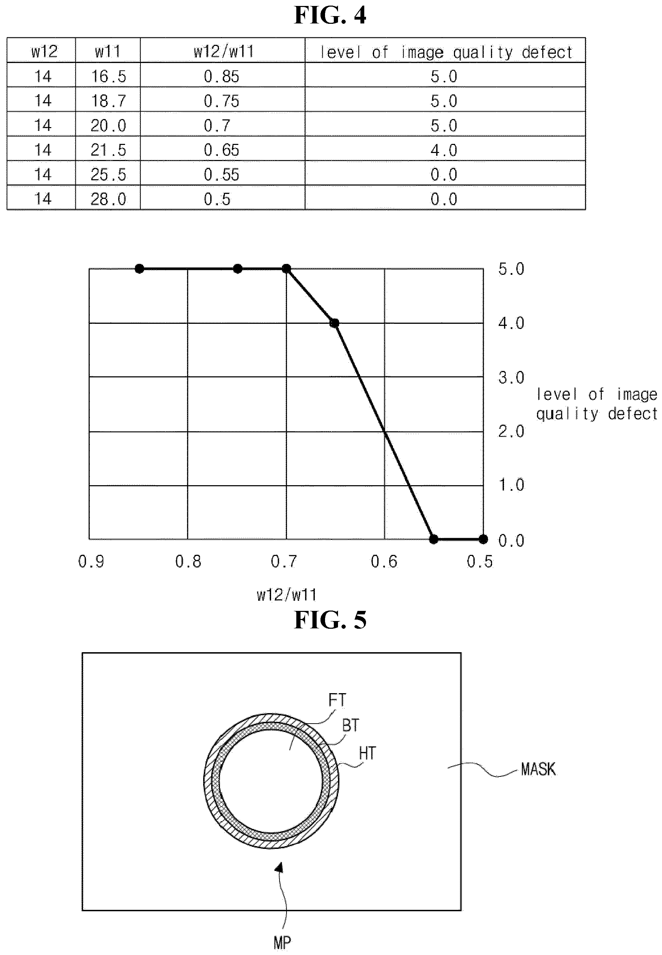

FIG. 4 is a view illustrating a result of an experiment on a level of image quality defect for a first width of a bottom end portion and a second width of a top end portion of a gap column spacer according to an exemplary example of the present disclosure.

An upper part of FIG. 4 shows a table with the first width w11 of the bottom end portion, the second width w12 of the top end portion, the ratio between them, and the level of image quality defect. A lower part of FIG. 4 shows a graph of the ratio (w12/w11) of the first width w11 and the second width w12 and the level of image quality defect.

Meanwhile, the level of image quality defect in FIG. 4 is the level of frame mura and RGB eye defect, where levels of 0~2 are acceptable levels (i.e., OK levels), and levels of 3~5 are unacceptable levels (i.e., NG levels).

Referring to FIG. 4, it can be seen that when the second width w12 of the top end portion is constant at 14um, the level of image quality defect decreases as the first width w1 1 of the bottom end portion increases.

In particular, it can be seen that when the ratio of the first and second widths (w12/w11) is greater than 0.55, the level of image quality defect is generally 4 to 5, and the ratio of the first and second widths (w12/w11) is 0.55 or less, the level of image quality defect is extremely low, reaching 0.

Through this, it can be seen that regarding the ratio (w12/w11) of the first width w11 to the second width w12, approximately 0.55 corresponds to a critical value that determines whether the image quality is actually poor.

Therefore, by setting the ratio (w12/w11) of the first width w11 to the second width w12 of the gap column spacer to 0.55 or less as in this exemplary example, an image quality defect can be significantly improved.

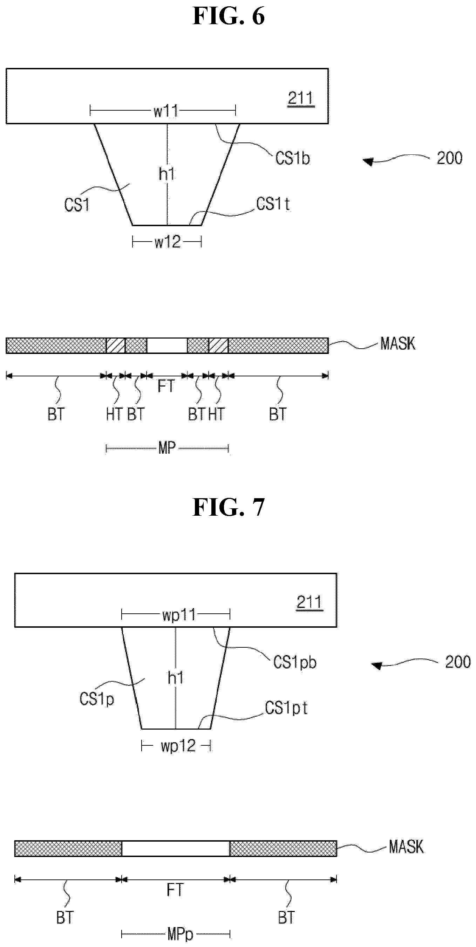

Hereinafter, with further reference to FIGs. 5 and 6, a method of forming a gap column spacer according to an exemplary example of the present disclosure is described.

FIG. 5 is a plan view schematically illustrating a mask pattern forming a gap column spacer according to an exemplary example of the present disclosure. FIG. 6 is a cross-sectional view schematically illustrating a gap column spacer and a corresponding mask pattern according to an exemplary example of the present disclosure.

Meanwhile, in FIG. 6, for convenience of explanation, the second substrate 211 and the gap column spacer CS1 of the counter substrate 200 are shown and other components of the counter substrate 200 are omitted.

Referring to FIGs. 5 and 6, the gap column spacer CS1 according to an exemplary example of the present disclosure may be formed through a photolithography process using a photomask MASK including the mask pattern MP corresponding to the gap column spacer CS1.

The mask pattern MP of the photomask MASK may include, for example, a full-tone pattern portion FT and a ring-shaped half-tone pattern portion (or first half-tone pattern portion) HT surrounding the full-tone pattern portion FT.

Here, the gap column spacer CS1 may be formed of, for example, a photosensitive material with negative photosensitive property in which a portion that receives light in a light exposure process remains and a portion that does not receive light in a light exposure process is removed.

In addition, the full-tone pattern portion FT has transmissive property of allowing light to pass through during the photolithography process. The half-tone pattern portion HT has semi-transmissive property.

Here, the half-tone pattern portion HT may be arranged to be spaced apart from the full-tone pattern portion FT at a certain distance. In other words, a spaced region may be formed between the half-tone pattern portion HT and the full-tone pattern portion FT. In this spaced region, a light blocking pattern portion BT that has a property of substantially blocking light may be formed.

Regarding a design of the mask pattern MP, for example, the full-tone pattern portion FT may have a width of approximately 15.0µm to 17.0µm, the half-tone pattern portion HT may have a width of approximately 1.0µm to 3.5µm, and a spacing between the full-tone pattern portion FT and the half-tone pattern portion HT (or a width of the light blocking pattern portion BT) may be approximately 0µm to 3.0µm, but not limited thereto. For example, the full-tone pattern portion FT may have a width of approximately 16.0µm, the half-tone pattern portion HT may have a width of approximately 2.0 µm, and a spacing between the full-tone pattern portion FT and the half-tone pattern portion HT (or a width of the light blocking pattern portion BT) may be approximately 2.0 µm. In addition, a width of the full-tone pattern portion FT, and a width of a spacing between the full-tone pattern portion FT and the half-tone pattern portion HT (or a width of the light blocking pattern portion BT) may be same or may be different.

As above, the light exposure process may be performed through the mask pattern MP combining the full-tone pattern portion FT and the half-tone pattern portion HT, so that the gap column spacer CS1 including the bottom end portion CS1b with the wide first width w11 and the top end portion CS1t with the narrow second width w12 can be formed.

In this regard, the mask pattern MP includes the half-tone pattern portion HT, which is spaced apart from the full-tone pattern part FT, together with the full-tone pattern portion FT, so that diffraction of light increases, allowing an effect similar to defocusing to be achieved. Accordingly, the bottom end portion CS1b of the gap column spacer CS1 can be formed to have the wide size.

As a result, in this exemplary example, the gap column spacer CS1 can be formed so that the bottom end portion CS1b has the wide width w11 and the top end portion CS1t has the narrow width.

Accordingly, the support force of the gap column spacer CS1 is improved, thereby preventing collapse due to an external force. Accordingly, it is possible to improve image quality defects such as a frame mura defect, a RGB eye defect, and a milky way defect that occur when the gap column spacer CS1 collapses.

Meanwhile, referring to FIG. 7, in a comparative example which is the related art case, when forming a gap column spacer CS1p, a corresponding mask pattern MPp is substantially configured with only a full-tone pattern portion FT. In this case, the gap column spacer CS1p is formed in a tapered shape or a frustum of a cone shape with a steep slope, so that a ratio (wp12/wp11) of widths of a top end portion CS1pt and a bottom end portion CS1pbis larger than that of this exemplary example.

For example, the ratio (wp12/wp11) of the second width wp12 of the top end portion CS1pt and the first width wp11 of the bottom end portion CS1pb may be approximately 0.65 to 0.95.

As such, in the comparative example, since the gap column spacer CS1p is formed using only the full-tone pattern portion FT, if the width wp11 of the bottom end portion CS1pb increases to increase a support force, the width wp12 of the top end portion CS1pt also increases inevitably.

In this case, if the support force is increased by increasing the width wp11 of the bottom end portion CS1pb, the width wp12 of the top end portion CS1pt also increases. Thus, a friction of the gap column spacer CS1p increases, causing a black touch mura defect and reducing a liquid crystal margin.

On the other hand, according to this exemplary example, the gap column spacer CS1 is formed through the mask pattern MP combining the full-tone pattern portion FT and the half-tone pattern portion HT spaced apart from the full-tone pattern portion FT. The gap column spacer CS1 can be formed to have the wide width w11 of the bottom end portion CS1b while maintaining the narrow width w12 at the top end portion CS1t. In this regard, the ratio w12/w11 of the widths of the bottom end portion CS1b and the top end portion CS1t can be set to 0.55 or less, for example, w12/w11 may be set to 0.5 or w12/w11 may be set to 0.45.

Accordingly, by increasing the support force of the gap column spacer CS1 and thus relieving the collapse of the gap column spacer CS1 due to an external force, image quality defects caused by collapse can be reduced. In addition, the top end portion CS1t can maintain the narrow width, thereby preventing a black touch mura defect and securing a sufficient liquid crystal margin.

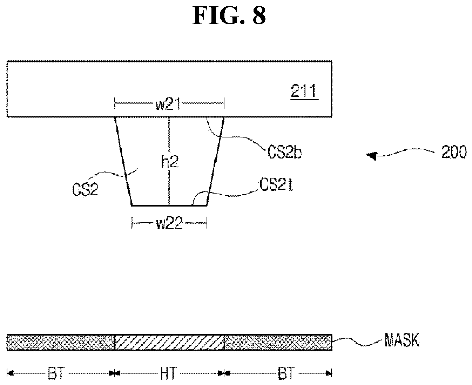

Meanwhile, formation and structure of the press column spacer CS2 of this exemplary example is described with further reference to FIG. 8.

The press column spacer CS2 may be formed using a mask pattern including a half-tone pattern portion (or second half-tone pattern portion) HT.

The press column spacer CS2 may be formed of the same photosensitive material as the gap column spacer CS1 through the same photolithography process.

Since the press column spacer CS2 is formed through the half-tone pattern portion HT, its thickness may be smaller than that of the gap column spacer CS1 (i.e., h2 < h1).

Moreover, since the press column spacer CS2 is formed using the half-tone pattern portion HT, compared to the gap column spacer CS1, the press column spacer CS2 is formed in a tapered shape or a frustum of a cone shape with a steep slope (or larger inclination angle) on a side surface. Thus, a ratio (w22/w21) of widths of a top end portion (or second top end portion) CS2t and a bottom end portion (or second bottom end portion) CS2b is greater.

For example, the ratio (w22/w21) of the third width w21 of the fourth width w22 of the top end portion CS2t and the bottom end portion CS2b may be approximately 0.65 to 0.95. For example, the ratio (w22/w21) of the third width w21 of the fourth width w22 of the top end portion CS2t and the bottom end portion CS2b may be approximately 0.7, or the ratio (w22/w21) of the third width w21 of the fourth width w22 of the top end portion CS2t and the bottom end portion CS2b may be approximately 0.75 .

As above, in this exemplary example, the mask pattern MP combining the full-tone pattern portion FT and the half-tone pattern portion HT is disposed corresponding to the gap column spacer CS1, and the half-tone pattern portion HT is disposed corresponding to the press column spacer CS2 at a position different from the mask pattern MP, then a light exposure process is performed on the photosensitive material, and then the photosensitive material is developed to form the gap column spacer CS1 and the press column spacer CS2.

Next, the counter substrate 200 in which the gap column spacer CS1 and the press column spacer CS2 are formed is combined (or bonded) with the array substrate 100 with the liquid crystal layer 300 interposed, so that the liquid crystal display device 10 can be manufactured.

As described above, according to the exemplary example of the present disclosure, the gap column spacer can be formed in a tapered shape or a frustum of a cone shape with a wide bottom end portion and a narrow top end portion.

Accordingly, a support force of the gap column spacer is improved, and thus collapse of the gap column spacer due to external force can be prevented. Accordingly, it is possible to relieve image quality defects such as frame mura defect, RGB eye defect, and milky way defect that may occur when the gap column spacer collapses.

Moreover, there is no need to increase the width of the top end portion of the gap column spacer in order to improve the support force, so that a black touch mura defect can be prevented and a sufficient liquid crystal margin can be secured.

The exemplary examples of the present disclosure can also be described as follows:
According to an aspect of the present disclosure, a liquid crystal display device, may comprise: an array substrate in which a pixel region is disposed, the pixel region including a transistor and a pixel electrode connected to the transistor; a counter substrate facing the array substrate; a liquid crystal layer interposed between the array substrate and the counter substrate; and a gap column spacer which maintains a cell gap between the array substrate and the counter substrate, and includes a bottom end portion having a first width, and a top end portion having a second width smaller than the first width.

A ratio of the second width to the first width may be 0.55 or less.

The gap column spacer may have a frustum of a cone shape with the first width of the bottom end portion being greater than the second width of the top end portion.

The bottom end portion of the gap column spacer may be located on a side of the counter substrate, and the top end portion of the gap column spacer may be located on a side of the array substrate.

The gap column spacer may be formed in the counter substrate.

display device may further comprise a press column spacer having a thickness smaller than a thickness of the gap column spacer, wherein the press column spacer includes a bottom end portion having a third width and a top end portion having a fourth width smaller than the third width.

The press column spacer may have a frustum of a cone shape with the third width of the bottom end portion being greater than the fourth width of the top end portion.

An inclination angle of a side surface of the press column spacer may be greater than that of a side surface of the gap column spacer.

A ratio of the fourth width to the third width may be 0.65 to 0.95.

The array substrate may include a common electrode facing the pixel electrode, and the counter substrate may include a color filter pattern corresponding to the pixel region.

According to another aspect of the present disclosure, a method of manufacturing a liquid crystal display device may comprise: placing a photomask on a first substrate on which a photosensitive material is formed and conducting a light exposure, the photomask including a mask pattern which includes a full-tone pattern portion, a first half-tone pattern portion surrounding the full-tone pattern portion, and a light blocking pattern portion between the full-tone pattern portion and the first half-tone pattern portion; developing a photosensitive material to form a gap column spacer corresponding to the mask pattern; and combining a first substrate on which the gap column spacer is formed and a second substrate which faces the first substrate with a liquid crystal layer formed between the first substrate and the second substrate.

The full-tone pattern portion may have a width of 15.0µm to 17.0µm, the first half-tone pattern portion may have a width of 1.0µm to 3.5µm.

A width of the light blocking pattern portion may be 0µm to 3.0µm.

The gap column spacer may include a bottom end portion having a first width, and a top end portion having a second width smaller than the first width.

A ratio of the second width to the first width may be 0.55 or less.

The gap column spacer may have a frustum of a cone shape with the first width of the bottom end portion being greater than the second width of the top end portion.

The photomask may include a second half-tone pattern portion disposed at a different position from the mask pattern, wherein the photosensitive material is developed to form a press column spacer which corresponds to the second half-tone pattern portion and has a thickness smaller than a thickness of the gap column spacer, and wherein the press column spacer has a bottom end portion having a third width and a top end portion having a fourth width smaller than the third width.

An inclination angle of a side surface of the press column spacer may be greater than that of a side surface of the gap column spacer.

A ratio of the fourth width to the third width may be 0.65 to 0.95.

The press column spacer may have a frustum of a cone shape with the third width of the bottom end portion being greater than the fourth width of the top end portion.

A transistor, a pixel electrode connected to the transistor, and a common electrode facing the pixel electrode may be formed on the second substrate, and a color filter pattern may be formed on the first substrate.

According to another aspect of the present disclosure, a liquid crystal display device, may comprise: a gap column spacer and a press column spacer on the first substrate, the press column spacer having a thickness smaller than a thickness of the gap column spacer; and a second substrate facing the first substrate with a liquid crystal layer therebetween, wherein each of the gap column spacer and the press column spacer has a shape with a bottom end portion having a width greater than a top end portion, and wherein a ratio of a second width of the top end portion of the gap column spacer to a first width of the bottom end portion of the gap column spacer is smaller than a ratio of a fourth width of the top end portion of the press column spacer to a third width of the bottom end portion of the press column spacer.

Each of the gap column spacer and the press column spacer may have a frustum of a cone shape with a bottom end portion having a width greater than a top end portion.

The ratio of the second width to the first width may be 0.55 or less.

The ratio of the fourth width to the third width may be 0.65 to 0.95.
Further examples are set out in the clauses below:
1. A liquid crystal display device, comprising: an array substrate in which a pixel region is disposed, the pixel region including a transistor and a pixel electrode connected to the transistor; a counter substrate facing the array substrate; a liquid crystal layer interposed between the array substrate and the counter substrate; and a gap column spacer which maintains a cell gap between the array substrate and the counter substrate, and includes a bottom end portion having a first width, and a top end portion having a second width smaller than the first width.
2. The display device of clause 1, wherein a ratio of the second width to the first width is 0.55 or less.
3. The display device of clause 1 or clause 2, wherein the gap column spacer has a frustum of a cone shape with the first width of the bottom end portion being greater than the second width of the top end portion.
4. The display device of any one of the preceding clauses, wherein the bottom end portion of the gap column spacer is located on a side of the counter substrate, and the top end portion of the gap column spacer is located on a side of the array substrate.
5. The display device of any one of the preceding clauses, wherein the gap column spacer is formed in the counter substrate.
6. The display device of any one of the preceding clauses, further comprising a press column spacer having a thickness smaller than a thickness of the gap column spacer,
   wherein the press column spacer includes a bottom end portion having a third width and a top end portion having a fourth width smaller than the third width.
7. The display device of clause 6, wherein the press column spacer has a frustum of a cone shape with the third width of the bottom end portion being greater than the fourth width of the top end portion.
8. The display device of clause 6 or clause 7, wherein an inclination angle of a side surface of the press column spacer is greater than an inclination angle of a side surface of the gap column spacer.
9. The display device of clause 6, wherein a ratio of the fourth width to the third width is 0.65 to 0.95.
10. The display device of any one of the preceding clauses, wherein the array substrate includes a common electrode facing the pixel electrode, and
   wherein the counter substrate includes a color filter pattern corresponding to the pixel region.
11. A method of manufacturing a liquid crystal display device, the method comprising:
   placing a photomask on a first substrate on which a photosensitive material is formed and conducting a light exposure, the photomask including a mask pattern which includes a full-tone pattern portion, a first half-tone pattern portion surrounding the full-tone pattern portion, and a light blocking pattern portion between the full-tone pattern portion and the first half-tone pattern portion;
   developing a photosensitive material to form a gap column spacer corresponding to the mask pattern; and
   combining a first substrate on which the gap column spacer is formed and a second substrate which faces the first substrate with a liquid crystal layer formed between the first substrate and the second substrate.
12. The method of clause 11, wherein the full-tone pattern portion has a width of 15.0µm to 17.0µm, the first half-tone pattern portion has a width of 1.0µm to 3.5µm.
13. The method of clause 12, wherein a width of the light blocking pattern portion is 0µm to 3.0µm.
14. The method of clause 11, wherein the gap column spacer includes a bottom end portion having a first width, and a top end portion having a second width smaller than the first width.
15. The method of clause 14, wherein a ratio of the second width to the first width is 0.55 or less.
16. The method of clause 14, wherein the gap column spacer has a frustum of a cone shape with the first width of the bottom end portion being greater than the second width of the top end portion.
17. The method of any one of clauses 11-16, wherein the photomask further includes a second half-tone pattern portion disposed at a different position from the mask pattern, wherein the photosensitive material is developed to form a press column spacer which corresponds to the second half-tone pattern portion and has a thickness smaller than a thickness of the gap column spacer, and wherein the press column spacer has a bottom end portion having a third width and a top end portion having a fourth width smaller than the third width.
18. The method of clause 17, wherein an inclination angle of a side surface of the press column spacer is greater than that an inclination angle of a side surface of the gap column spacer.
19. The method of clause 17 or 18, wherein a ratio of the fourth width to the third width is 0.65 to 0.95.
20. The display device of clause 17, wherein the press column spacer has a frustum of a cone shape with the third width of the bottom end portion being greater than the fourth width of the top end portion.
21. The method of any one of clause s11-20, wherein a transistor, a pixel electrode connected to the transistor, and a common electrode facing the pixel electrode are formed on the second substrate, and wherein a color filter pattern is formed on the first substrate.
22. A liquid crystal display device, comprising: a gap column spacer and a press column spacer on a first substrate, the press column spacer having a thickness smaller than a thickness of the gap column spacer; and a second substrate facing the first substrate with a liquid crystal layer between the first substrate and the second substrate,
   wherein each of the gap column spacer and the press column spacer has a shape with a bottom end portion having a width greater than a top end portion, and wherein a ratio of a second width of the top end portion of the gap column spacer to a first width of the bottom end portion of the gap column spacer is smaller than a ratio of a fourth width of the top end portion of the press column spacer to a third width of the bottom end portion of the press column spacer.
23. The display device of clause 22, wherein each of the gap column spacer and the press column spacer has a frustum of a cone shape with a bottom end portion having a width greater than a top end portion.
24. The display device of clause 22 or 23, wherein the ratio of the second width to the first width is 0.55 or less.
25. The display device of any one of clauses 22-24, wherein the ratio of the fourth width to the third width is 0.65 to 0.95.
26. The display device of any one of clauses 22-25, wherein a transistor, a pixel electrode connected to the transistor, and a common electrode facing the pixel electrode are formed on the second substrate, and wherein a color filter pattern is formed on the first substrate.

A transistor, a pixel electrode connected to the transistor, and a common electrode facing the pixel electrode may be formed on the second substrate, and a color filter pattern may be formed on the first substrate.

It will be apparent to those skilled in the art that various modifications and variation can be made in the present disclosure without departing from the scope of the disclosure. Thus, it is intended that the present disclosure cover the modifications and variations of this disclosure provided they come within the scope of the appended claims and their equivalents.

## Claims

1. A liquid crystal display device, comprising:
an array substrate in which a pixel region is disposed, the pixel region including a transistor and a pixel electrode connected to the transistor;
a counter substrate facing the array substrate;
a liquid crystal layer interposed between the array substrate and the counter substrate; and
a gap column spacer which maintains a cell gap between the array substrate and the counter substrate, and includes a bottom end portion having a first width, and a top end portion having a second width smaller than the first width.

2. The display device of claim 1, wherein a ratio of the second width to the first width is 0.55 or less; and optionally
wherein the gap column spacer has a frustum of a cone shape with the first width of the bottom end portion being greater than the second width of the top end portion; and optionally
wherein the bottom end portion of the gap column spacer is located on a side of the counter substrate, and the top end portion of the gap column spacer is located on a side of the array substrate; and optionally
wherein the gap column spacer is formed in the counter substrate.

3. The display device of any one of the preceding claims, further comprising a press column spacer having a thickness smaller than a thickness of the gap column spacer,
wherein the press column spacer includes a bottom end portion having a third width and a top end portion having a fourth width smaller than the third width; or optionally
wherein the press column spacer has a frustum of a cone shape with the third width of the bottom end portion being greater than the fourth width of the top end portion; or optionally
wherein an inclination angle of a side surface of the press column spacer is greater than an inclination angle of a side surface of the gap column spacer, or optionally
wherein a ratio of the fourth width to the third width is 0.65 to 0.95.

4. The display device of any one of the preceding claims, wherein the array substrate includes a common electrode facing the pixel electrode, and
wherein the counter substrate includes a color filter pattern corresponding to the pixel region.

5. A method of manufacturing a liquid crystal display device, the method comprising:
placing a photomask on a first substrate on which a photosensitive material is formed and conducting a light exposure, the photomask including a mask pattern which includes a full-tone pattern portion, a first half-tone pattern portion surrounding the full-tone pattern portion, and a light blocking pattern portion between the full-tone pattern portion and the first half-tone pattern portion;
developing a photosensitive material to form a gap column spacer corresponding to the mask pattern; and
combining a first substrate on which the gap column spacer is formed and a second substrate which faces the first substrate with a liquid crystal layer formed between the first substrate and the second substrate.

6. The method of claim 5, wherein the full-tone pattern portion has a width of 15.0µm to 17.0µm, the first half-tone pattern portion has a width of 1.0µm to 3.5µm; and optionally
wherein a width of the light blocking pattern portion is 0µm to 3.0µm.

7. The method of claim 5, wherein the gap column spacer includes a bottom end portion having a first width, and a top end portion having a second width smaller than the first width.

8. The method of claim 7, wherein a ratio of the second width to the first width is 0.55 or less; or optionally
wherein the gap column spacer has a frustum of a cone shape with the first width of the bottom end portion being greater than the second width of the top end portion.

9. The method of any one of claims 5-8, wherein the photomask further includes a second half-tone pattern portion disposed at a different position from the mask pattern,
wherein the photosensitive material is developed to form a press column spacer which corresponds to the second half-tone pattern portion and has a thickness smaller than a thickness of the gap column spacer, and
wherein the press column spacer has a bottom end portion having a third width and a top end portion having a fourth width smaller than the third width; and optionally
wherein an inclination angle of a side surface of the press column spacer is greater than that an inclination angle of a side surface of the gap column spacer.

10. The method of claim 9, wherein a ratio of the fourth width to the third width is 0.65 to 0.95.

11. The display device of claim 9, wherein the press column spacer has a frustum of a cone shape with the third width of the bottom end portion being greater than the fourth width of the top end portion.

12. The method of any one of claims 5-11, wherein a transistor, a pixel electrode connected to the transistor, and a common electrode facing the pixel electrode are formed on the second substrate, and
wherein a color filter pattern is formed on the first substrate.

13. A liquid crystal display device, comprising:
a gap column spacer and a press column spacer on a first substrate, the press column spacer having a thickness smaller than a thickness of the gap column spacer; and
a second substrate facing the first substrate with a liquid crystal layer between the first substrate and the second substrate,
wherein each of the gap column spacer and the press column spacer has a shape with a bottom end portion having a width greater than a top end portion, and
wherein a ratio of a second width of the top end portion of the gap column spacer to a first width of the bottom end portion of the gap column spacer is smaller than a ratio of a fourth width of the top end portion of the press column spacer to a third width of the bottom end portion of the press column spacer.

14. The display device of claim 13, wherein each of the gap column spacer and the press column spacer has a frustum of a cone shape with a bottom end portion having a width greater than a top end portion; and optionally
wherein the ratio of the second width to the first width is 0.55 or less; and optionally
wherein the ratio of the fourth width to the third width is 0.65 to 0.95.

15. The display device of claim 14, wherein a transistor, a pixel electrode connected to the transistor, and a common electrode facing the pixel electrode are formed on the second substrate, and
wherein a color filter pattern is formed on the first substrate.
